(19) Europäisches Patentamt
European Patent Office
Office européen des brevets

(11) Veröffentlichungsnummer: **0 372 334 B1**

(12) **EUROPÄISCHE PATENTSCHRIFT**

(45) Veröffentlichungstag der Patentschrift: **02.02.94**

(51) Int. Cl.$^5$: **C09B 29/085**, C09B 67/22, D06P 1/18

(21) Anmeldenummer: **89121819.0**

(22) Anmeldetag: **25.11.89**

Die Akte enthält technische Angaben, die nach dem Eingang der Anmeldung eingereicht wurden und die nicht in dieser Patentschrift enthalten sind.

(54) **Wasserunlösliche Monoazofarbstoffe, Mischungen dieser Monoazofarbstoffe, ihre Herstellung und Verwendung.**

(30) Priorität: **09.12.88 DE 3841505**

(43) Veröffentlichungstag der Anmeldung:
**13.06.90 Patentblatt 90/24**

(45) Bekanntmachung des Hinweises auf die Patenterteilung:
**02.02.94 Patentblatt 94/05**

(84) Benannte Vertragsstaaten:
**CH DE FR GB IT LI**

(56) Entgegenhaltungen:
**GB-A- 2 010 304**

(73) Patentinhaber: **CASSELLA Aktiengesellschaft**
**Hanauer Landstrasse 526**
**D-60386 Frankfurt(DE)**

(72) Erfinder: **Bühler, Ulrich, Dr.**
**Kastanienweg 8**
**D-8755 Alzenau(DE)**
Erfinder: **Kunz, Erika, Dr.**
**Siemensstrasse 14**
**D-6100 Darmstadt(DE)**
Erfinder: **Kühn, Reinhard**
**Heinrich-Bleicher-Strasse 19**
**D-6000 Frankfurt am Main 50(DE)**
Erfinder: **Boos, Margareta**
**Am See 6**
**D-6234 Hattersheim(DE)**

(74) Vertreter: **Urbach, Hans-Georg, Dr. et al**
**Hanauer Landstrasse 526**
**D-60386 Frankfurt (DE)**

**EP 0 372 334 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wertvolle neue, von ionogenen Gruppen freie wasserunlösliche Monoazofarbstoffe der allgemeinen Formel I

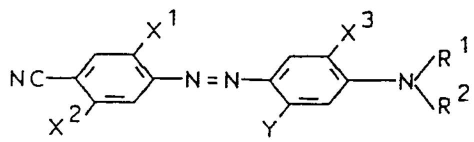

(I)

worin
$X^1$ und $X^2$ unabhängig voneinander Fluor, Chlor oder Brom,
$X^3$ Chlor oder Wasserstoff,
Y NHCOR,
R Wasserstoff oder Alkyl mit 1 bis 6 C-Atomen,
$R^1$ Wasserstoff, Alkyl mit 1 bis 6 C-Atomen oder Alkenyl mit 3 bis 5 C-Atomen,
$R^2$ Alkyl mit 1 bis 6 C-Atomen, Alkenyl mit 3 bis 5 C-Atomen, Benzyl, Phenethyl, Cyclopentyl oder Cyclohexyl, bedeuten.

Die Erfindung betrifft auch Mischungen von zwei oder mehr Monoazofarbstoffen der Formel I, Verfahren zur Herstellung dieser Monoazofarbstoffe und ihrer Mischungen sowie Verfahren zum Färben und Bedrukken von hydrophoben Fasermaterialien und deren Mischungen mit natürlichen Fasermaterialien mit diesen Monoazofarbstoffen und ihren Mischungen.

Aus der DE-A-2 756 331, Beispiel 1 kennt man unter anderem bereib den Farbstoff

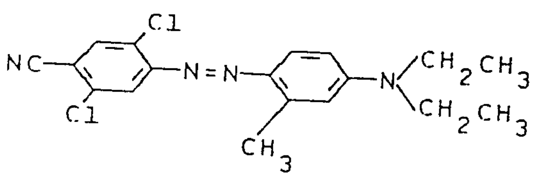

.

Beispiel 7 dieser Druckschrift beschreibt einen Farbstoff mit der Formel :

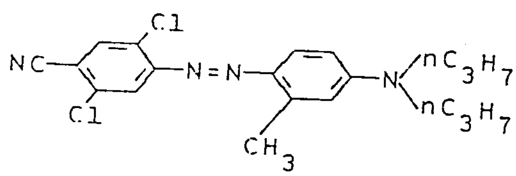

.

Weiterhin sind Farbstoffe mit 4-Amino-2,5-dichlorbenzonitril als Diazokomponente bereits bekannt und in den französischen Patentschriften 697 138 und 697 218 sowie der deutschen Patentschrift 1 719 076 beschrieben. Es wurde jedoch gefunden, daß die erfindungsgemäßen Farbstoffe den bereits bekannten vor allem im färberischen Verhalten überlegen sind.

Weiter wurde gefunden, daß die erfindungsgemäßen Farbstoffe aufgrund ihres klaren Farbtones als Alternative zu den teuren, bislang fast ausschließlich zur Erzeugung dieses Farbtons eingesetzten Anthrachinonfarbstoffen vom Typ C.I. Disperse Red 60 in den üblichen Färbeverfahren verwendet werden können.

Die für R, $R^1$ und $R^2$ stehenden Alkyl- oder Alkenylreste können geradkettig oder verzweigt sein. Alkylreste mit 1 bis 6 C-Atomen, die für R, $R^1$ oder $R^2$ stehen können, sind z.B. Methyl, Ethyl, n-Propyl, i-Propyl, n-Butyl, i-Butyl, sek.-Butyl, tert.-Butyl, n-Pentyl, Pentyl-2, Pentyl-3, i-Pentyl, n-Hexyl.

Für $X^1$ und $X^2$ ist Brom und insbesondere Chlor bevorzugt. Vorzugsweise sind $X^1$ und $X^2$ gleich.

Für $X^3$ ist Wasserstoff bevorzugt. Wenn jedoch $R^1$ Wasserstoff und gleichzeitig $R^2$ sekundäres Alkyl mit 3 bis 6 C-Atomen bedeutet, dann bedeutet $X^3$ vorzugsweise Chlor.

Bevorzugte Reste R sind Alkylreste mit 1 bis 4 C-Atomen. Bevorzugte Reste $R^1$ und $R^2$ sind Alkylreste mit 2 bis 4 C-Atomen oder Alkenylreste mit 3 oder 4 C-Atomen. Bevorzugt ist dabei mindestens ein Alkylrest linear, besonders bevorzugt sind dabei beide Alkylreste linear. Besonders bevorzugt sind weiter beide Reste $R^1$ und $R^2$ Allyl.

Wenn $R^1$ für Wasserstoff steht, sind bevorzugte Reste $R^2$ Alkylreste mit 2 bis 6 C-Atomen, Benzyl, Phenethyl, Cyclopentyl oder Cyclohexyl, insbesondere aber sekundäre Alkylreste mit 3 bis 6 C-Atomen.

Bevorzugte Monoazofarbstoffe der Formel I sind solche, in denen R für Alkyl mit 1 bis 4 C-Atomen, insbesondere 2 oder 3 C-Atomen, steht, $R^1$ und $R^2$ unabhängig voneinander lineares Alkyl mit 2 bis 4 C-Atomen bedeuten und insbesondere gleich sind oder $R^1$ und $R^2$ Allyl bedeuten und $X^3$ Wasserstoff ist.

Bevorzugte Monoazofarbstoffe der Formel I sind weiter solche, in denen R für Methyl und insbesondere Alkyl mit 2 oder 3 C-Atomen steht, $R^1$ Wasserstoff ist und $R^2$ sekundäres Alkyl mit 3 bis 6 C-Atomen bedeutet.

Besonders bevorzugte Monoazofarbstoffe der Formel I sind bevorzugte Monoazofarbstoffe, bei denen $X^1$ und $X^2$ gleich sind und für Brom und insbesondere Chlor stehen.

Die erfindungsgemäßen Farbstoffmischungen bestehen aus zwei oder mehr verschiedenen, z.B. 2, 3 oder 4 verschiedenen Farbstoffen der allgemeinen Formel I. Bevorzugt sind erfindungsgemäße Farbstoffmischungen, die aus 2 oder 3 verschiedenen Farbstoffen der allgemeinen Formel I bestehen. Bevorzugt sind weiter Farbstoffmischungen, die aus Farbstoffen der Formel I bestehen, wobei R Alkyl mit 1 bis 4 C-Atomen, insbesondere 2 oder 3 C-Atomen, $R^1$ Wasserstoff und $R^2$ sekundärer Alkyl mit 3 bis 6 C-Atomen bedeuten und sich die Einzelfarbstoffe der Mischungen mindestens durch den Alkylrest R unterscheiden und $X^3$ gleich und bevorzugt Wasserstoff ist. Besonders bevorzugt sind dabei Farbstoffmischungen, die einen oder mehrere Farbstoffe mit R gleich n-Propyl enthalten.

Bevorzugt sind weiter Farbstoffmischungen, die aus Farbstoffen der Formel I bestehen, wobei R Alkyl mit 1 bis 4 C-Atomen und $R^1$ und $R^2$ lineares Alkyl mit 2 bis 4 C-Atomen oder Allyl bedeuten und sich die Einzelfarbstoffe der Mischungen entweder mindestens durch die Alkylreste $R^1$ und $R^2$ oder aber insbesondere mindestens durch die Alkylreste R unterscheiden.

Die erfindungsgemäßen Farbstoffe können in an sich bekannter Weise hergestellt werden, indem man ein Amin der allgemeinen Formel II, in der $X^1$ und $X^2$ für Fluor, Chlor oder Brom stehen

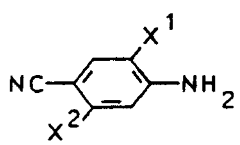

(II)

diazotiert und auf eine Kupplungskomponente der allgemeinen Formel III

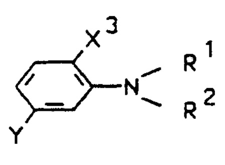

(III)

in der $X^3$, Y, $R^1$ und $R^2$ die oben angegebenen Bedeutungen haben, kuppelt.

Aus den Aminen der allgemeinen Formel II werden Lösungen von Diazoniumverbindungen in an sich bekannter Weise durch Einwirkung von salpetriger Säure oder anderen Nitrosoniumionen bildenden Systemen in einem sauren wäßrigen Medium, einer Niederalkancarbonsäure, wie z.B. Ameisensäure, Essigsäure oder Propionsäure oder deren Mischungen oder einem organischen Lösungsmittel bei Temperaturen von 0 bis 40 °C erhalten.

Die Kupplung erfolgt ebenfalls in an sich bekannter Weise durch Vereinigung der erhaltenen Lösung der Diazoniumverbindung mit einer Lösung der Kupplungskomponente bei Temperaturen von 0 bis 40 °C, vorzugsweise 0 bis 25 °C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel I

kann wie üblich isoliert und getrocknet werden.

Die benötigten Ausgangsverbindungen der allgemeinen Formeln II und III lassen sich aus bekannten Handelsprodukten nach bekannten Verfahren herstellen.

So ist z.B. die Diazokomponente der Formel II zugänglich über eine Cyan-Sandmeyer-Reaktion aus dem technisch verfügbaren 2,5-Dichlor-4-nitranilin mit anschließender Bechamp-Reduktion oder Hydrierung zum Amin oder durch Cyan-Sandmeyer-Reaktion mit dem N-monoacetylierten 2,5-Dichlorphenylendiamin-1,4 mit anschließender hydrolytischer Abspaltung der Acetyl-Schutzgruppe.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und der maximale Gewichtsanteil 90 %. Bei Farbstoffmischungen, die nur aus zwei Farbstoffen der allgemeinen Formel I bestehen, ist ein Mengenverhältnis von 70 : 30 bis 30 : 70 bevorzugt, d.h. der Gewichtsanteil des Farbstoffs beträgt 30 : 70 %.

Die erfindungsgemäßen Farbstoffmischungen können nach verschiedenen Verfahren hergestellt werden:

1. durch Mischen von mindestens zwei separat hergestellten und formierten Einzelfarbstoffen der Formel I,
2. durch Mischen der separat hergestellten, nicht formierten Einzelfarbstoffe der Formel I und gemeinsame Formierung und
3. bevorzugt durch Diazotierung eines oder mehrerer Amine der Formel II und Kupplung auf mehrere bzw. mindestens eine Kupplungskomponente der Formel III.

Die erfindungsgemäßen Azofarbstoffe bzw. Farbstoffmischungen sind einzeln oder im Gemisch untereinander oder auch im Gemisch mit anderen Dispersionsfarbstoffen vorzüglich zum Färben und Bedrucken von hydrophoben synthetischen Materialien geeignet.

Als hydrophobe synthetische Materialien kommen in Betracht: Cellulose-2 1/2-Acetat, Cellulosetriacetat, Polyamide, und besonders hochmolekulare Polyester, wie z.B. Polyethylenglykoltherephthalat.

Vorzugsweise werden die erfindungsgemäßen Farbstoffe und Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen oder von Materialien aus Cellulosetriacetat eingesetzt. Diese Materialien können in Form von flächen- oder fadenförmigen Gebilden vorliegen und z.B. zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis ca. 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 180 bis 230 °C fixiert wird. Das Bedrucken der genannten Materialien kann so durch geführt werden, daß die mit erfindungsgemäße Farbstoffe enthaltenen Druckpasten bedruckte Ware zur Fixierung des Farbstoffs, gegebenenfalls in Gegenwart eines Carriers, bei Temperaturen zwischen 110 bis 230 °C mit HT-Dampf, Druckdampf oder Trockenhitze behandelt wird.

Ein weiterer Gegenstand der Erfindung sind Drucktinten bzw. Druckpasten für den Transferdruck, die mit derartigen Farbstoffen bedruckten bzw. imprägnierten Hilfsträger und die Substrate die mit derartigen Farbstoffen nach dem Transferdruckprinzip gefärbt worden sind.

Das Transferdruckverfahren im allgemeinen (vgl. z.B. "Colour Index", 3.Ausgabe, Bd.2, S.2480) und im besonderen (vgl. z.B. DOS 3 121 981) ist bekannt. Besonders geeignete Druckverfahren zur Herstellung von bedruckten Papierhilfsträgern sind der Tiefdruck und der Rotationsfilmdruck. Geeignete Substrate sind flächenförmige Gebilde, wie Vliese, Filze, Pelze, Folien und vor allem Gewebe aus synthetischen Polyamiden und insbesondere aus aromatischen Polyestern und Zellulosetriacetat sowie deren Mischungen mit Baumwolle.

Bei den letztgenannten teilsynthetischen Fasermaterialien sowie bei Fasermaterialien aus reinen Zellulosefasern, wie etwa Baumwolle, empfiehlt es sich, das Substrat vor dem eigentlichen Transferdruck mit einer die Fasern hydrophobierenden reaktionsfähigen Substanz, beispielsweise mit Reaktantharzen und/oder Faserquellmitteln, zu behandeln.

Man erhält auf diese Weise farbstarke, gelbstichig rote bis rotstichig violette Färbungen und Drucke mit sehr guten Echtheitseigenschaften.

Die erfindungsgemäßen Farbstoffe eignen sich auch zum Färben der vorstehend aufgeführten hydrophoben Materialien, aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe in möglichst feiner Verteilung vorliegen.

Die Feinverteilung der Farbstoffe erfolgt in an sich bekannter Weise dadurch, daß man den in der Farbrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. umsetzungsprodukte von Alkylenoxiden, wie z.B. Ethylen- oder Propylenoxid, mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglycolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 30 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können auch noch weitere Hilfsmittel enthalten, z.B. solche, die als Oxydationsmittel wirken, wie z.B. Natrium-m-nitrobenzolsulfonat oder fungizide Mittel, wie z.B. Natrium-o-phenylphenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Continue-Verfahren, bei denen durch kontinuierliche Farbstoffeinspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxidations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, soweit verdünnt, daß sich für die Färbung ein Flottenverhältnis von 1 : 5 bis 1 : 50 ergibt. Zusätzlich werden den Flotten im allgemeinen wietere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln, wie z.B. Alkali-Alginaten oder dgl., und gegebenenfalls weiteren Zusätzen, wie z.B. Fixierbeschleunigern, Netzmitteln und Oxidationsmitteln, zu Druckpasten verknetet.

Die Erfindung wird durch die Beispiele näher erläutert. Prozentangaben sind Gew.%.

Beispiel 1

18,7 g 2,5-Dichlor-5-aminobenzonitril werden bei 15° bis 20°C in 100 ml Eisessig mit 33,0 g Nitrosylschwefelsäure diazotiert und bei 0°C bis 5°C unter gleichzeitiger Zugabe von 500 g Eis auf 24,6 g N-n-Butyryl-N',N'-diethylphenylendiamin-1,3, die vorher in 250 ml Wasser mit 25 ml roher Salzsäure gelöst wurden, gekuppelt. Nach beendeter Kupplung wird der entstandene Farbstoff filtriert, mit Wasser neutral gewaschen und unter vermindertem Druck getrocknet. Es werden 38 g des Farbstoffs der Formel

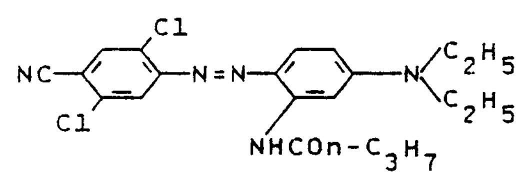

erhalten, der bei 530 nm sein Absorptionsmaximum hat und Polyester in klaren, blaustichig roten Farbtönen färbt.

0,6 g des so erhaltenen Farbstoffs wird in feindispergierter Form in 2000 g Wasser eingerührt. Die Dispersion wird mit Essigsäure auf einen pH-Wert von 5 bis 6 eingestellt und mit 4,0 g Ammoniumsulfat

und 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalat ein und färbt 1 h bei 130 °C.

Nach anschließendem Spülen, reduktiver Nachbehandlung mit einer 0,2%igen Natriumdithionitlösung während 15 min bei 70 bis 80 °C, Spülen und Trocknen erhält man eine farbstarke rote Färbung mit sehr guten coloristischen Eigenschaften.

Wird unter sonst gleichen Bedingungen bei 125 °C gefärbt, erhält man eine Färbung gleicher Farbstärke. Die Nachzüge bei 135 °C sind farblos.

Beispiel 2

Werden, wie in Beispiel 1 beschrieben, anstelle von 24,6 g N-n-Butyryl-N',N'-diethylphenylendiamin-1,3 eine Mischung von 12,3 g N-n-Butyryl-N',N'-diethylphenylendiamin-1,3 und 21,6 g N-Acetyl-N',N'-diethylphenylendiamin-1,3 eingesetzt, so erhält man 35 g einer Farbstoffmischung, die 50 Gew.% Farbstoff der Formel

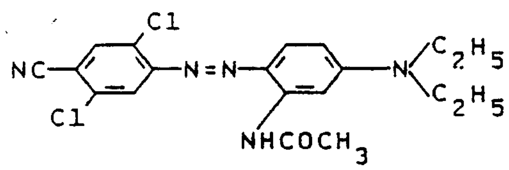

und 50 Gew.% Farbstoff der Formel

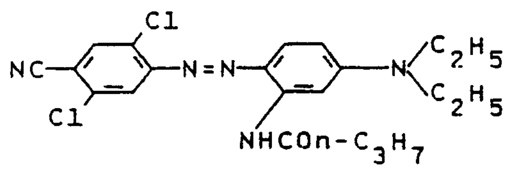

enthält, die sich in o-Dichlorbenzol mit roter Farbe löst.

20,0 g der so erhaltenen Farbstoffmischung werden in feiner Verteilung einer Druckppaste, die 45,0 g Johannisbrotkernmehl, 6,0 g 3-nitrobenzolsulfonsaures Natrium und 3,0 g Zitronensäure auf 1000 g enthält, einverleibt. Wird Polyester mit dieser Druckpaste bedruckt, das bedruckte Gewebe nach dem Trocknen 15 min bei 1,5 atü Dampfdruck gedämpft, gespült, geseift, erneut gespült und getrocknet, so erhält man einen farbstarken roten Druck von sehr guten coloristischen Eigenschaften.

In den nachstehenden Tabellen sind weitere erfindungsgemäße Farbstoffe und Farbstoffmischungen angegeben, die auf Polyestermaterialien ebenfalls farbstarke Färbungen bzw. Drucke mit ebenfalls sehr guten coloristischen Eigenschaften liefern.

Tabelle 1

Farbstoffe der Formel Ia

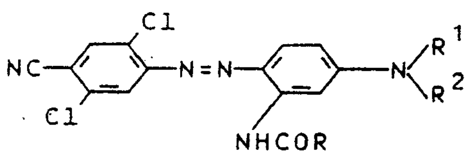

(Ia)

| Beisp. Nr. | R | $R^1$ | $R^2$ | Nuance auf PES |
|---|---|---|---|---|
| 01 | $CH_3$ | $C_2H_5$ | $C_2H_5$ | 1 |
| 02 | $C_2H_5$ | $C_2H_5$ | $C_2H_5$ | 1 |
| 03 | $i-C_3H_7$ | $C_2H_5$ | $C_2H_5$ | 1 |
| 04 | $n-C_4H_9$ | $C_2H_5$ | $C_2H_5$ | 1 |
| 05 | sek. $C_4H_9$ | $C_2H_5$ | $C_2H_5$ | 1 |
| 06 | $n-C_5H_{11}$ | $C_2H_5$ | $C_2H_5$ | 1 |
| 07 | $CH(CH_3)C_3H_7$ | $C_2H_5$ | $C_2H_5$ | 1 |
| 08 | $CH(C_2H_5)_2$ | $C_2H_5$ | $C_2H_5$ | 1 |
| 09 | $CH_3$ | $n-C_3H_7$ | $n-C_3H_7$ | 1 |
| 10 | $C_2H_5$ | $n-C_3H_7$ | $n-C_3H_7$ | 1 |
| 11 | $n-C_3H_7$ | $n-C_3H_7$ | $n-C_3H_7$ | 1 |
| 12 | $i-C_3H_7$ | $n-C_3H_7$ | $n-C_3H_7$ | 1 |
| 13 | $n-C_4H_9$ | $n-C_3H_7$ | $n-C_3H_7$ | 1 |
| 14 | sek. $C_4H_9$ | $n-C_3H_7$ | $n-C_3H_7$ | 1 |
| 15 | $CH(CH_3)C_3H_7$ | $n-C_3H_7$ | $n-C_3H_7$ | 1 |

| Beisp. Nr. | R | $R^1$ | $R^2$ | Nuance auf PES |
|---|---|---|---|---|
| 16 | $C_2H_5$ | $CH_3$ | $CH_3$ | 1 |
| 17 | $n-C_3H_7$ | $CH_3$ | $CH_3$ | 1 |
| 18 | $n-C_4H_9$ | $CH_3$ | $CH_3$ | 1 |
| 19 | $CH_3$ | $n-C_4H_9$ | $n-C_4H_9$ | 1 |
| 20 | $C_2H_5$ | $n-C_4H_9$ | $n-C_4H_9$ | 1 |
| 21 | $i-C_3H_7$ | $n-C_4H_9$ | $n-C_4H_9$ | 1 |
| 22 | $C_2H_5$ | $CH_3$ | $C_2H_5$ | 1 |
| 23 | $i-C_3H_7$ | $CH_3$ | $n-C_3H_7$ | 1 |
| 24 | $n-C_3H_7$ | $CH_3$ | $n-C_3H_7$ | 1 |
| 25 | $CH_3$ | $CH_3$ | $n-C_4H_9$ | 1 |
| 26 | $C_2H_5$ | $CH_3$ | $n-C_4H_9$ | 1 |
| 27 | $n-C_3H_7$ | $CH_3$ | $n-C_4H_9$ | 1 |
| 28 | $CH_3$ | $CH_3$ | $n-C_5H_{11}$ | 1 |
| 29 | $C_2H_5$ | $CH_3$ | $n-C_6H_{13}$ | 1 |
| 30 | $CH_3$ | $C_2H_5$ | $n-C_3H_7$ | 1 |
| 31 | $C_2H_5$ | $C_2H_5$ | $n-C_3H_7$ | 1 |
| 32 | $i-C_3H_7$ | $C_2H_5$ | $n-C_3H_7$ | 1 |
| 33 | $i-C_4H_9$ | $C_2H_5$ | $n-C_3H_7$ | 1 |
| 34 | $CH_3$ | $C_2H_5$ | $n-C_4H_9$ | 1 |
| 35 | $n-C_3H_7$ | $C_2H_5$ | $n-C_4H_9$ | 1 |
| 36 | $CH_3$ | $C_2H_5$ | $n-C_5H_{11}$ | 1 |
| 37 | $i-C_3H_7$ | $i-C_3H_7$ | $n-C_4H_9$ | 1 |
| 38 | $CH_3$ | $n-C_3H_7$ | $n-C_6H_{13}$ | 1 |
| 39 | $C_2H_5$ | $n-C_4H_9$ | $n-C_5H_{11}$ | 1 |
| 40 | $CH_3$ | $n-C_6H_{13}$ | $n-C_6H_{13}$ | 1 |
| 41 | $CH_3$ | $CH_3$ | $i-C_3H_7$ | 1 |
| 42 | $C_2H_5$ | $CH_3$ | $i-C_3H_7$ | 1 |
| 43 | $n-C_3H_7$ | $CH_3$ | sek.$C_4H_9$ | 1 |
| 44 | $C_2H_5$ | $CH_3$ | $i-C_4H_9$ | 1 |
| 45 | $C_2H_5$ | $CH_3$ | $i-C_5H_{11}$ | 1 |
| 46 | $CH_3$ | $CH_3$ | $C_5H_{11}-2$ | 1 |
| 47 | $C_2H_5$ | $C_2H_5$ | $i-C_3H_7$ | 1 |
| 48 | $i-C_3H_7$ | $C_2H_5$ | $i-C_3H_7$ | 1 |

| Beisp. Nr. | R | $R^1$ | $R^2$ | Nuance auf PES |
|---|---|---|---|---|
| 49 | $CH_3$ | $C_2H_5$ | $i-C_4H_9$ | 1 |
| 50 | $n-C_3H_7$ | $C_2H_5$ | $i-C_4H_9$ | 1 |
| 51 | $n-C_5H_{11}$ | $C_2H_5$ | $C_5H_{11}-3$ | 1 |
| 52 | $CH_3$ | $n-C_3H_7$ | $i-C_3H_7$ | 1 |
| 53 | $CH(CH_3)C_3H_7$ | $n-C_3H_7$ | $i-C_3H_7$ | 1 |
| 54 | $CH_3$ | $n-C_3H_7$ | $i-C_6H_{13}$ | 1 |
| 55 | $C_2H_5$ | $n-C_4H_9$ | $i-C_3H_7$ | 1 |
| 56 | $CH_3$ | $n-C_4H_9$ | $i-C_4H_9$ | 1 |
| 57 | $CH_3$ | $n-C_6H_{13}$ | $i-C_3H_7$ | 1 |
| 58 | $i-C_3H_7$ | $i-C_3H_7$ | $i-C_3H_7$ | 1 |
| 59 | $C_2H_5$ | $i-C_3H_7$ | $i-C_4H_9$ | 1 |
| 60 | $CH_3$ | $i-C_4H_9$ | $i-C_4H_9$ | 1 |
| 61 | $CH_3$ | $CH_2CH=CH_2$ | $CH_2CH=CH_2$ | 2 |
| 62 | $C_2H_5$ | $CH_2CH=CH_2$ | $CH_2CH=CH_2$ | 2 |
| 63 | $n-C_3H_7$ | $CH_2CH=CH_2$ | $CH_2CH=CH_2$ | 2 |
| 64 | $C_2H_5$ | $CH_2CH=CHCH_3$ | $CH_2CH=CHCH_3$ | 2 |
| 65 | $n-C_5H_{11}$ | $CH_2CH=CH_2$ | $CH_2CH=CH_2$ | 2 |
| 66 | $C_2H_5$ | $C(CH_3)=CH_2$ | $CH_2CH=CH_2$ | 2 |
| 67 | $i-C_3H_7$ | $CH_3$ | $CH_2CH=CH_2$ | 2 |
| 68 | $n-C_3H_7$ | $C_2H_5$ | $CH_2CH=CH_2$ | 2 |
| 69 | $C_2H_5$ | $n-C_3H_7$ | $CH_2CH=CH_2$ | 2 |
| 70 | $C_2H_5$ | $C_2H_5$ | $CH_2CH=CHCH_3$ | 2 |
| 71 | $CH_3$ | $n-C_4H_9$ | $CH_2CH=CH_2$ | 2 |
| 72 | $n-C_3H_7$ | H | $C_2H_5$ | 2 |
| 73 | $i-C_3H_7$ | H | $C_2H_5$ | 2 |
| 74 | $C_2H_5$ | H | $n-C_4H_9$ | 2 |
| 75 | $n-C_4H_9$ | H | $n-C_4H_9$ | 2 |
| 76 | $C_2H_5$ | H | $CH_2CH=CH_2$ | 3 |
| 77 | $CH_3$ | H | $i-C_3H_7$ | 2 |
| 78 | $n-C_3H_7$ | H | $i-C_3H_7$ | 2 |
| 79 | $C_4H_9-2$ | H | $i-C_3H_7$ | 2 |
| 80 | $CH_3$ | H | $i-C_4H_9$ | 2 |
| 81 | $i-C_3H_7$ | H | $i-C_4H_9$ | 2 |

| Beisp. Nr. | R | $R^1$ | $R^2$ | Nuance auf PES |
|---|---|---|---|---|
| 82 | $CH_3$ | H | sek.$C_4H_9$ | 2 |
| 83 | $C_2H_5$ | H | sek.$C_4H_9$ | 2 |
| 84 | n-$C_3H_7$ | H | sek.$C_4H_9$ | 2 |
| 85 | n-$C_4H_9$ | H | sek.$C_4H_9$ | 2 |
| 86 | $CH_3$ | H | $C_5H_{11}$-2 | 2 |
| 87 | $C_2H_5$ | H | $C_5H_{11}$-2 | 2 |
| 88 | $CH_3$ | H | $C_5H_{11}$-3 | 2 |
| 89 | i-$C_3H_7$ | H | $C_5H_{11}$-3 | 2 |
| 90 | $CH_3$ | H | $CH_2C_6H_5$ | 3 |
| 91 | $C_2H_5$ | H | $CH_2C_6H_5$ | 3 |
| 92 | $C_2H_5$ | H | $(CH_2)_2C_6H_5$ | 3 |
| 93 | $CH_3$ | H | cyclo-$C_6H_{11}$ | 2 |
| 94 | n-$C_3H_7$ | H | cyclo-$C_6H_{11}$ | 2 |
| 95 | $C_2H_5$ | H | cyclo-$C_5H_9$ | 2 |
| 96 | i-$C_3H_7$ | H | cyclo-$C_5H_9$ | 2 |
| 97 | H | n-$C_3H_7$ | n-$C_3H_7$ | 1 |
| 98 | H | $C_2H_5$ | n-$C_3H_7$ | 1 |
| 99 | H | n-$C_4H_9$ | n-$C_4H_9$ | 1 |
| 100 | H | H | sek.$C_4H_9$ | 1 |
| 101 | H | H | $C_5H_{11}$-2 | 1 |
| 102 | H | H | $CH_2C_6H_5$ | 1 |
| 103 | H | $CH_2CH=CH_2$ | $CH_2CH=CH_2$ | 2 |

Tabelle 2

Farbstoffe der Formel

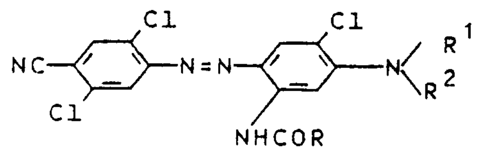

(Ib)

| Beisp. Nr. | R | $R^1$ | $R^2$ | Nuance auf PES |
|---|---|---|---|---|
| 01 | $CH_3$ | $C_2H_5$ | $C_2H_5$ | 4 |
| 02 | $i-C_3H_7$ | $C_2H_5$ | $C_2H_5$ | 4 |
| 03 | $n-C_3H_7$ | $C_2H_5$ | $C_2H_5$ | 4 |
| 04 | $CH_3$ | $n-C_3H_7$ | $n-C_3H_7$ | 4 |
| 05 | $C_2H_5$ | $n-C_3H_7$ | $n-C_3H_7$ | 4 |
| 06 | $CH_3$ | $C_2H_5$ | $n-C_4H_9$ | 4 |
| 07 | $n-C_3H_7$ | H | $C_2H_5$ | 1 |
| 08 | $C_2H_5$ | H | $n-C_3H_7$ | 1 |
| 09 | $i-C_3H_7$ | H | $i-C_3H_7$ | 1 |
| 10 | $CH_3$ | H | $n-C_4H_9$ | 1 |
| 11 | $CH_3$ | H | sek.$C_4H_9$ | 1 |
| 12 | $C_2H_5$ | H | sek.$C_4H_9$ | 1 |
| 13 | $i-C_3H_7$ | H | sek.$C_4H_9$ | 1 |
| 14 | $n-C_3H_7$ | H | sek.$C_4H_9$ | 1 |
| 15 | $CH_3$ | H | $C_5H_{11}-2$ | 1 |
| 16 | $n-C_3H_7$ | H | $C_5H_{11}-2$ | 1 |
| 17 | $n-C_4H_9$ | H | $C_5H_{11}-2$ | 1 |
| 18 | $C_2H_5$ | H | cyclo-$C_6H_{11}$ | 1 |
| 19 | $CH_3$ | H | cyclo-$C_6H_{11}$ | 1 |
| 20 | $C_2H_5$ | H | cyclo-$C_5H_9$ | 1 |
| 21 | $C_2H_5$ | H | $CH_2C_6H_5$ | 1 |
| 22 | H | $n-C_3H_7$ | $n-C_3H_7$ | 4 |
| 23 | H | $CH_3$ | $n-C_4H_9$ | 4 |
| 24 | H | H | $C_5H_{11}-2$ | 1 |

| Beisp. Nr. | R | $R^1$ | $R^2$ | Nuance auf PES |
|---|---|---|---|---|
| 25 | H | H | $CH_2CH=CH_2$ | 2 |
| 26 | H | $CH_2CH=CH_2$ | $CH_2CH=CH_2$ | 1 |
| 27 | $CH_3$ | $CH_2CH=CH_2$ | $CH_2CH=CH_2$ | 1 |
| 28 | $C_2H_5$ | $CH_2CH=CH_2$ | $CH_2CH=CHCH_3$ | 1 |
| 29 | $C_2H_5$ | $C_2H_5$ | $CH_2CH=CH_2$ | 1 |

Tabelle 3

Farbstoffe der Formel

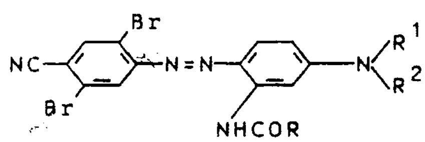

(Ic)

| Beisp. Nr. | R | $R^1$ | $R^2$ | Nuance auf PES |
|---|---|---|---|---|
| 01 | $CH_3$ | $C_2H_5$ | $C_2H_5$ | 1 |
| 02 | $C_2H_5$ | $C_2H_5$ | $C_2H_5$ | 1 |
| 03 | $n\text{-}C_3H_7$ | $C_2H_5$ | $C_2H_5$ | 1 |
| 04 | $n\text{-}C_6H_{13}$ | $C_2H_5$ | $C_2H_5$ | 1 |
| 05 | $CH_3$ | $n\text{-}C_3H_7$ | $n\text{-}C_3H_7$ | 1 |
| 06 | $C_2H_5$ | $n\text{-}C_3H_7$ | $n\text{-}C_3H_7$ | 1 |
| 07 | $n\text{-}C_3H_7$ | $n\text{-}C_3H_7$ | $n\text{-}C_3H_7$ | 1 |
| 08 | $i\text{-}C_3H_7$ | $n\text{-}C_3H_7$ | $n\text{-}C_3H_7$ | 1 |
| 09 | sek.$C_4H_9$ | $n\text{-}C_3H_7$ | $n\text{-}C_3H_7$ | 1 |
| 10 | $i\text{-}C_4H_9$ | $n\text{-}C_3H_7$ | $n\text{-}C_3H_7$ | 1 |
| 11 | $C_2H_5$ | $CH_3$ | $CH_3$ | 1 |
| 12 | $n\text{-}C_4H_9$ | $CH_3$ | $CH_3$ | 1 |
| 13 | $CH_3$ | $n\text{-}C_4H_9$ | $n\text{-}C_4H_9$ | 1 |
| 14 | $C_2H_5$ | $n\text{-}C_4H_9$ | $n\text{-}C_4H_9$ | 1 |
| 15 | $CH_3$ | $CH_3$ | $n\text{-}C_3H_7$ | 1 |
| 16 | $n\text{-}C_3H_7$ | $CH_3$ | $n\text{-}C_3H_7$ | 1 |
| 17 | $n\text{-}C_4H_9$ | $CH_3$ | $n\text{-}C_4H_9$ | 1 |

| Beisp. Nr. | R | $R^1$ | $R^2$ | Nuance auf PES |
|---|---|---|---|---|
| 18 | $C_2H_5$ | $C_2H_5$ | $n-C_3H_7$ | 1 |
| 19 | $i-C_3H_7$ | $C_2H_5$ | $n-C_3H_7$ | 1 |
| 20 | $C_2H_5$ | $C_2H_5$ | $n-C_5H_{11}$ | 1 |
| 21 | $CH_3$ | $n-C_3H_7$ | $n-C_4H_9$ | 1 |
| 22 | $C_2H_5$ | $n-C_4H_9$ | $n-C_5H_{11}$ | 1 |
| 23 | $CH_3$ | $n-C_5H_{11}$ | $n-C_5H_{11}$ | 1 |
| 24 | $C_2H_5$ | $CH_3$ | $i-C_3H_7$ | 1 |
| 25 | $i-C_3H_7$ | $CH_3$ | $i-C_4H_9$ | 1 |
| 26 | $CH_3$ | $CH_3$ | $C_5H_{11}-3$ | 1 |
| 27 | $n-C_4H_9$ | $C_2H_5$ | $i-C_4H_9$ | 1 |
| 28 | $C_2H_5$ | $n-C_4H_9$ | $i-C_4H_9$ | 1 |
| 29 | $CH_3$ | $n-C_4H_9$ | $C_5H_{11}-2$ | 1 |
| 30 | $C_2H_5$ | $CH_2CH=CH_2$ | $CH_2CH=CH_2$ | 2 |
| 31 | $n-C_3H_7$ | $CH_2CH=CH_2$ | $CH_2CH=CH_2$ | 2 |
| 32 | $CH_3$ | $CH_2CH=CHCH_3$ | $CH_2CH=CH_2$ | 2 |
| 33 | $C_2H_5$ | $C_2H_5$ | $CH_2CH=CH_2$ | 2 |
| 34 | $C_2H_5$ | $n-C_3H_7$ | $CH_2CH=CH_2$ | 2 |
| 35 | $i-C_3H_7$ | H | $n-C_3H_7$ | 2 |
| 36 | $n-C_3H_7$ | H | $i-C_3H_7$ | 2 |
| 37 | $C_2H_5$ | H | $i-C_3H_7$ | 2 |
| 38 | $i-C_4H_9$ | H | $i-C_4H_9$ | 2 |
| 39 | $n-C_3H_7$ | H | $i-C_4H_9$ | 2 |
| 40 | $C_2H_5$ | H | sek.$C_4H_9$ | 2 |
| 41 | $CH_3$ | H | sek.$C_4H_9$ | 2 |
| 42 | $i-C_3H_7$ | H | sek.$C_4H_9$ | 2 |
| 43 | $C_2H_5$ | H | $C_5H_{11}-2$ | 2 |
| 44 | $n-C_3H_7$ | H | $C_5H_{11}-2$ | 2 |
| 45 | $i-C_3H_7$ | H | $C_5H_{11}-2$ | 2 |
| 46 | $CH_3$ | H | $C_5H_{11}-3$ | 2 |
| 47 | $n-C_4H_9$ | H | $C_5H_{11}-3$ | 2 |
| 48 | $C_2H_5$ | H | $CH_2-C_6H_5$ | 3 |
| 49 | $CH_3$ | H | cyclo-$C_6H_{11}$ | 2 |
| 50 | $n-C_3H_7$ | H | cyclo-$C_6H_{11}$ | 2 |

## Tabelle 4

Farbstoffe der Formel

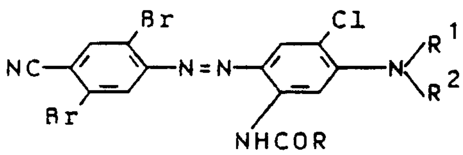

(Id)

| Beisp. Nr. | R | $R^1$ | $R^2$ | Nuance auf PES |
|---|---|---|---|---|
| 01 | $CH_3$ | $C_2H_5$ | $C_2H_5$ | 4 |
| 02 | $C_2H_5$ | $C_2H_5$ | $C_2H_5$ | 4 |
| 03 | $n-C_3H_7$ | $n-C_3H_7$ | $n-C_3H_7$ | 4 |
| 04 | $i-C_3H_7$ | $n-C_3H_7$ | $n-C_3H_7$ | 4 |
| 05 | $n-C_3H_7$ | H | $n-C_3H_7$ | 1 |
| 06 | $C_2H_5$ | H | $i-C_3H_7$ | 1 |
| 07 | $C_2H_5$ | H | $i-C_4H_9$ | 1 |
| 08 | $CH_3$ | H | sek.$C_4H_9$ | 1 |
| 09 | $C_2H_5$ | H | sek.$C_4H_9$ | 1 |
| 10 | $n-C_3H_7$ | H | sek.$C_4H_9$ | 1 |
| 11 | $CH_3$ | H | $C_5H_{11}-2$ | 1 |
| 12 | $i-C_3H_7$ | H | $C_5H_{11}-2$ | 1 |
| 13 | $n-C_3H_7$ | H | $C_5H_{11}-3$ | 1 |

## Tabelle 5

Farbstoffe der Formel

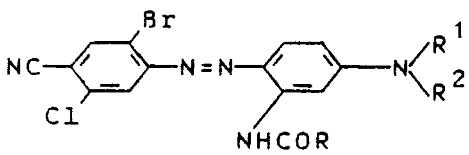

(Ie)

| Beisp. Nr. | R | $R^1$ | $R^2$ | Nuance auf PES |
|---|---|---|---|---|
| 01 | $CH_3$ | $n-C_3H_7$ | $n-C_3H_7$ | 1 |
| 02 | $C_2H_5$ | $C_2H_5$ | $C_2H_5$ | 1 |
| 03 | $n-C_3H_7$ | $C_2H_5$ | $C_2H_5$ | 1 |
| 04 | $C_2H_5$ | H | sek.$C_4H_9$ | 1 |
| 05 | $CH_3$ | $CH_2CH=CH_2$ | $CH_2CH=CH_2$ | 2 |

## Tabelle 6

Farbstoffe der Formel

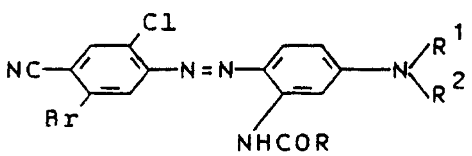

(If)

| Beisp. Nr. | R | $R^1$ | $R^2$ | Nuance auf PES |
|---|---|---|---|---|
| 01 | $CH_3$ | $C_2H_5$ | $C_2H_5$ | 1 |
| 02 | $i-C_3H_7$ | $C_2H_5$ | $C_2H_5$ | 1 |
| 03 | $C_2H_5$ | $C_2H_5$ | $n-C_3H_7$ | 1 |
| 04 | $n-C_4H_9$ | H | $C_5H_{11}-2$ | 2 |

## Tabelle 7

Farbstoffe der Formel

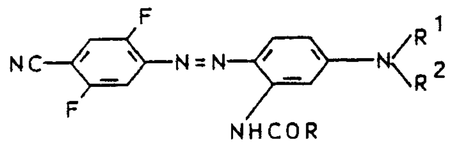

(Ig)

| Beisp. Nr. | R | $R^1$ | $R^2$ | Nuance auf PES |
|---|---|---|---|---|
| 01 | $C_2H_5$ | $C_2H_5$ | $C_2H_5$ | 2 |
| 02 | $C_2H_5$ | $CH_2CH=CH_2$ | $CH_2CH=CH_2$ | 3 |
| 03 | $i-C_3H_7$ | $C_2H_5$ | $i-C_4H_9$ | 3 |
| 04 | $CH_3$ | H | $CH_2C_6H_5$ | 3 |
| 05 | $n-C_3H_7$ | H | cyclo-$C_5H_9$ | 3 |
| 06 | $i-C_4H_9$ | H | $n-C_4H_9$ | 3 |
| 07 | $CH_3$ | $n-C_3H_7$ | $n-C_3H_7$ | 2 |
| 08 | $n-C_3H_7$ | $C_2H_5$ | $C_2H_5$ | 2 |

## Tabelle 8

Farbstoffe der Formel

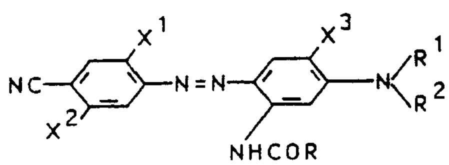

(I)

| Beisp. Nr. | $X^1$ | $X^2$ | $X^3$ | R | $R^1$ | $R^2$ | Nuance auf PES |
|---|---|---|---|---|---|---|---|
| 01 | F | F | Cl | H | H | $C_5H_{11}-2$ | 3 |
| 02 | F | F | Cl | $C_2H_5$ | H | sek.$C_4H_9$ | 3 |
| 03 | Br | Cl | Cl | $CH_3$ | H | $C_5H_{11}-3$ | 1 |

| Beisp. Nr. | $X^1$ | $X^2$ | $X^3$ | R | $R^1$ | $R^2$ | Nuance auf PES |
|---|---|---|---|---|---|---|---|
| 04 | Cl | Br | Cl | $n-C_3H_7$ | $CH_3$ | $i-C_4H_9$ | 4 |
| 05 | Cl | Br | Cl | $C_2H_5$ | H | $i-C_3H_7$ | 1 |
| 06 | Br | F | H | $CH_3$ | $n-C_3H_7$ | $n-C_3H_7$ | 2 |
| 07 | Br | F | H | $n-C_3H_7$ | $C_2H_5$ | $C_2H_5$ | 2 |
| 08 | F | Br | H | $C_2H_5$ | $C_2H_5$ | $C_2H_5$ | 2 |
| 09 | F | Br | H | $n-C_5H_{11}$ | H | $n-C_5H_{11}$ | 2 |
| 10 | F | Br | Cl | $i-C_3H_7$ | H | $C_5H_{11}-2$ | 3 |
| 11 | Cl | F | H | $CH_3$ | $n-C_4H_9$ | $n-C_4H_9$ | 2 |
| 12 | Cl | F | H | $C_2H_5$ | $C_2H_5$ | $n-C_3H_7$ | 2 |
| 13 | Cl | F | Cl | H | H | $n-C_4H_9$ | 2 |
| 14 | F | Cl | Cl | $n-C_3H_7$ | H | $sek.C_4H_9$ | 2 |
| 15 | F | Cl | H | $C_2H_5$ | $CH_2CH=CH_2$ | $CH_2CH=CH_2$ | 2 |

## Tabelle 9

Farbstoffmischungen aus Farbstoffen der Formel

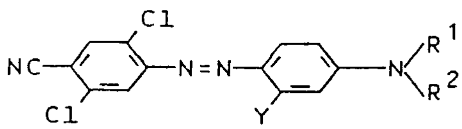

(I k)

| Beisp. Nr. | Y | $R^1$ | $R^2$ | Nuance auf PES |
|---|---|---|---|---|
| 01 | 50% $NHCOCH_3$ | $C_2H_5$ | $C_2H_5$ | 1 |
| | 50% $NHCOC_2H_5$ | $C_2H_5$ | $C_2H_5$ | |
| 02 | 70% $NHCOCH_3$ | $n-C_3H_7$ | $n-C_3H_7$ | 1 |
| | 30% $NHCOCH_3$ | $C_2H_5$ | $C_2H_5$ | |
| 03 | 60% $NHCOi-C_3H_7$ | $C_2H_5$ | $C_2H_5$ | 1 |
| | 40% $NHCOCH_3$ | $C_2H_5$ | $C_2H_5$ | |
| 04 | 65% $NHCOCH_3$ | $n-C_3H_7$ | $n-C_3H_7$ | 1 |
| | 35% $NHCOn-C_3H_7$ | $C_2H_5$ | $C_2H_5$ | |
| 05 | 40% $NHCOCH_3$ | $n-C_4H_9$ | $n-C_3H_7$ | 1 |
| | 60% $NHCOi-C_3H_7$ | $n-C_3H_7$ | $C_2H_5$ | |
| 06 | 80% $NHCOn-C_3H_7$ | $C_2H_5$ | $C_2H_5$ | 1 |
| | 20% $NHCOi-C_3H_7$ | $n-C_3H_7$ | $n-C_3H_7$ | |
| 07 | 50% $NHCOCH_3$ | H | sek.$C_4H_9$ | 1 |
| | 50% $NHCOn-C_3H_7$ | H | sek.$C_4H_9$ | |
| 08 | 30% $NHCOCH_3$ | H | $C_5H_{11}-2$ | 1 |
| | 70% $NHCOi-C_3H_7$ | H | $C_5H_{11}-2$ | |

| Beisp. Nr. | Y | $R^1$ | $R^2$ | Nuance auf PES |
|---|---|---|---|---|
| 09 | 40% $NHCOCH_3$ | H | $CH_2CH=CH_2$ | 1 |
| | 60% $NHCOC_2H_5$ | H | $C_2H_5$ | |
| 10 | 25% $NHCOCH_3$ | H | $n-C_3H_7$ | 1 |
| | 75% $NHCOn-C_4H_9$ | H | $C_2H_5$ | |
| 11 | 20% $NHCOCH_3$ | H | $n-C_3H_7$ | 1 |
| | 20% $NHCOC_2H_5$ | H | $C_2H_5$ | |
| | 60% $NHCOn-C_3H_7$ | H | $C_2H_5$ | |

Tabelle 10

Farbstoffmischungen aus Farbstoffen der Formel

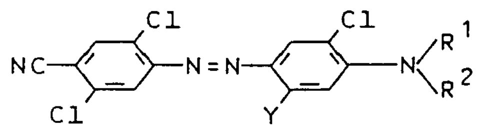

(I l)

| Beisp. Nr. | Y | $R^1$ | $R^2$ | Nuance auf PES |
|---|---|---|---|---|
| 01 | 50% $NHCOCH_3$ | H | $i-C_3H_7$ | 1 |
| | 50% $NHCOi-C_3H_7$ | H | $i-C_3H_7$ | |
| 02 | 60% $NHCOCH_3$ | H | sek.$C_4H_9$ | 1 |
| | 40% $NHCOC_2H_5$ | H | $C_5H_{11}-2$ | |

Tabelle 11

Farbstoffmischungen aus Farbstoffen der Formel

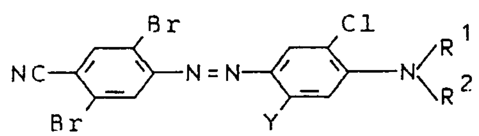

(I m)

| Beisp. Nr. | Y | $R^1$ | $R^2$ | Nuance auf PES |
|---|---|---|---|---|
| 01 | 50% $NHCOCH_3$ | H | $i-C_3H_7$ | 1 |
| | 50% $NHCOn-C_3H_7$ | H | $i-C_3H_7$ | |
| 02 | 35% $NHCOCH_3$ | H | sek.$C_4H_9$ | 1 |
| | 65% $NHCOn-C_3H_7$ | H | $C_5H_{11}-2$ | |

Tabelle 11

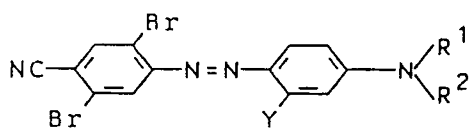

(I n)

| Beisp. Nr. | | Y | $R^1$ | $R^2$ | Nuance auf PES |
|---|---|---|---|---|---|
| 03 | 15% | $NHCOCH_3$ | $C_2H_5$ | $C_2H_5$ | 1 |
| | 85% | $NHCOn-C_3H_7$ | $C_2H_5$ | $C_2H_5$ | |
| 04 | 40% | $NHCOCH_3$ | $n-C_3H_7$ | $n-C_3H_7$ | 1 |
| | 60% | $NHCOi-C_3H_7$ | $C_2H_5$ | $C_2H_5$ | |
| 05 | 50% | $NHCOCH_3$ | H | $C_5H_{11}-3$ | 1 |
| | 50% | $NHCOC_2H_5$ | H | $C_5H_{11}-3$ | |
| 06 | 60% | $NHCOCH_3$ | H | sek.$C_4H_9$ | 1 |
| | 40% | $NHCOn-C_3H_7$ | H | sek.$C_4H_9$ | |

In den Tabellen 1 bis 11 bedeuten die Angaben in der letzten Spalte:

1 = baustichiges Rot
2 = Rot
3 = gelbstichiges Rot
4 = rotstichiges Violett

In der Tabelle 9 bedeuten z.B. die Angaben des Beispiels 02, daß das Farbstoffgemisch aus 70 Gew.% des Farbstoffs der Formel

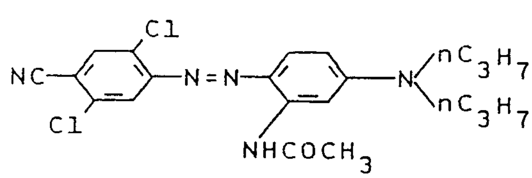

und aus 30 Gew.% des Farbstoffs der Formel

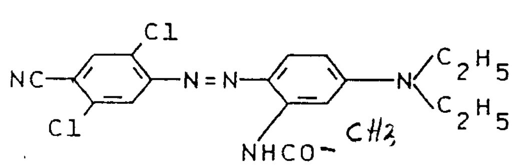

besteht. Die anderen Beispiele der Tabellen 9 bis 11 sind sinngemäß in gleicher Weise zu verstehen, d.h. die Prozentangaben bedeuten den Gehalt der Einzelfarbstoffe in Gewichtsprozent im Farbstoffgemisch.

## Patentansprüche

**1.** Monoazofarbstoffe der allgemeinen Formel I

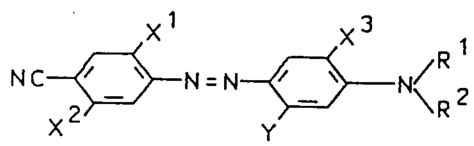

(I)

worin
$X^1$ und $X^2$ unabhängig voneinander Fluor, Chlor oder Brom,
$X^3$ Chlor oder Wasserstoff,
Y NHCOR,
R Wasserstoff oder Alkyl mit 1 bis 6 C-Atomen,
$R^1$ Wasserstoff, Alkyl mit 1 bis 6 C-Atomen oder Alkenyl mit 3 bis 5 C-Atomen,
$R^2$ Alkyl mit 1 bis 6 C-Atomen, Alkenyl mit 3 bis 5 C-Atomen, Benzyl, Phenethyl, Cyclopentyl oder Cyclohexyl, bedeuten.

**2.** Monoazofarbstoffe nach Anspruch 1, dadurch gekennzeichnet, daß $X^1$ und $X^2$ gleich sind und Brom, vorzugsweise Chlor bedeuten.

**3.** Monoazofarbstofe nach Anspruch 1 und/oder 2, dadurch gekennzeichnet, daß $R^1$ und/oder $R^2$ lineares Alkyl mit 2 bis 4 C-Atomen oder Allyl bedeuten.

**4.** Monoazofarbstoffe nach einem oder mehreren der Ansprüche 1 bis 3, dadurch gekennzeichnet, daß $R^1$ und $R^2$ gleich sind.

**5.** Monoazofarbstoffe nach einem oder mehreren der Ansprüche 1 bis 4, dadurch gekennzeichnet, daß $X^3$ Wasserstoff bedeutet.

**6.** Monoazofarbstoffe nach einem oder mehreren der Ansprüche 1 bis 5, dadurch gekennzeichnet, daß R Alkyl mit 1 bis 4 C-Atomen, insbesondere Alkyl mit 2 oder 3 C-Atomen, bedeutet.

**7.** Mischungen von zwei oder mehreren Azofarbstoffen nach einem oder mehreren der Ansprüche 1 bis 6.

**8.** Verfahren zur Herstellung von Azofarbstoffen der Formel I des Anspruchs 1, dadurch gekennzeichnet, daß man eine Diazoniumverbindung eines Amins der Formel II

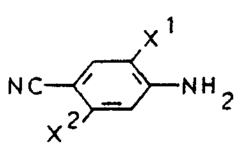

(II)

auf eine Kupplungskomponente der allgemeinen Formel III

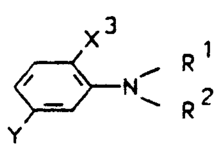

(III)

in der Y, $X^1$, $X^2$, $X^3$, $R^1$ und $R^2$ die Anspruch 1 angegebenen Bedeutungen besitzen, kuppelt.

**9.** Verfahren nach Anspruch 8, dadurch gekennzeichnet, daß man zur Herstellung von Mischungen von zwei oder mehreren Farbstoffen der Formel I zwei oder mehr Diazoniumverbindungen von Aminen der Formel II und/oder zwei oder mehrere Kupplungskomponenten der Formel III einsetzt.

**10.** Verfahren zum Färben und Bedrucken von hydrophoben Fasermaterialien und deren Mischungen mit natürlichen Fasermaterialien mit den Monoazofarbstoffen der allgemeinen Formel I gemäß Anspruch 1 und deren Mischungen gemäß Anspruch 7.

## Claims

**1.** Monoazo dyestuffs of the general formula I

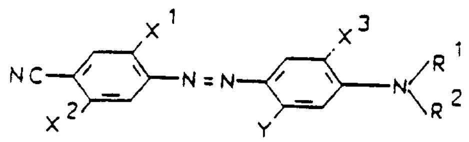

(I)

wherein
$X^1$ and $X^2$ independently of one another denote fluorine, chlorine or bromine,
$X^3$ denotes chlorine or hydrogen,
Y denotes NHCOR,
R denotes hydrogen or alkyl having 1 to 6 C atoms,
$R^1$ denotes hydrogen, alkyl having 1 to 6 C atoms or alkenyl having 3 to 5 C atoms and
$R^2$ denotes alkyl having 1 to 6 C atoms, alkenyl having 3 to 5 C atoms, benzyl, phenethyl, cyclopentyl or cyclohexyl.

**2.** Monoazo dyestuffs according to Claim 1, characterized in that $X^1$ and $X^2$ are identical and denote bromine or, preferably, chlorine.

**3.** Monoazo dyestuffs according to Claim 1 and/or 2, characterized in that $R^1$ and/or $R^2$ denote linear alkyl having 2 to 4 C atoms or allyl.

**4.** Monoazo dyestuffs according to one or more of Claims 1 to 3, characterized in that $R^1$ and $R^2$ are identical.

**5.** Monoazo dyestuffs according to one or more of Claims 1 to 4, characterized in that $X^3$ denotes hydrogen.

**6.** Monoazo dyestuffs according to one or more of Claims 1 to 5, characterized in that R denotes alkyl having 1 to 4 C atoms, in particular alkyl having 2 or 3 C atoms.

**7.** Mixtures of two or more azo dyestuffs according to one or more of Claims 1 to 6.

**8.** Process for the preparation of azo dyestuffs of the formula I of Claim 1, characterized in that a diazonium compound of an amine of the formula II

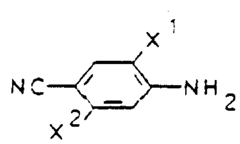

(II)

is coupled to a coupling component of the general formula III

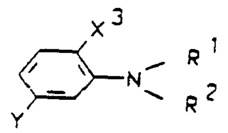

(III)

in which Y, $X^1$, $X^2$, $X^3$, $R^1$ and $R^2$ have the meanings given in Claim 1.

**9.** Process according to Claim 8, characterized in that, to prepare mixtures of two or more dyestuffs of the formula I, two or more diazonium compounds of amines of the formula II and/or two or more coupling components of the formula III are employed.

**10.** Process for dyeing and printing hydrophobic fibre materials and mixtures thereof with naturally occurring fibre materials with the monoazo dyestuffs of the general formula I according to Claim 1 and mixtures thereof according to Claim 7.

**Revendications**

**1.** Colorants monoazoïques de formule générale I :

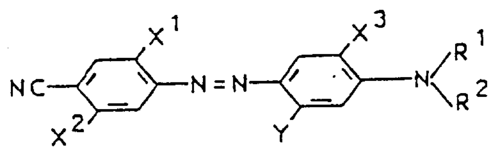

(I)

dans laquelle

| | |
|---|---|
| $X^1$ et $X^2$, | indépendamment l'un de l'autre, sont chacun le fluor, le chlore ou le brome, |
| $X^3$ | est le chlore ou un hydrogène, |
| Y | est NHCOR, |
| R | est un hydrogène ou un radical alkyle ayant de 1 à 6 atomes de carbone, |
| $R^1$ | est un hydrogène ou un radical alkyle ayant de 1 à 6 atomes de carbone ou alcényle ayant de 3 à 5 atomes de carbone, |
| $R^2$ | est un radical alkyle ayant de 1 à 6 atomes de carbone, alcényle ayant de 3 à 5 atomes de carbone, benzyle, phénéthyle, cyclopentyle ou cyclohexyle. |

**2.** Colorants monoazoïques selon la revendication 1, caractérisés en ce que $X^1$ et $X^2$ sont identiques et représentent chacun le brome, de préférence le chlore.

**3.** Colorants monoazoïques selon les revendications 1 et/ou 2, caractérisés en ce que $R^1$ et/ou $R^2$ représentent chacun un radical alkyle linéaire ayant de 2 à 4 atomes de carbone ou allyle.

**4.** Colorants monoazoïques selon l'une ou plusieurs des revendications 1 à 3, caractérisés en ce que $R^1$ et $R^2$ sont identiques.

**5.** Colorants monoazoïques selon l'une ou plusieurs des revendications 1 à 4, caractérisés en ce que $X^3$ est un hydrogène.

**6.** Colorants monoazoïques selon l'une ou plusieurs des revendications 1 à 5, caractérisés en ce que R est un radical alkyle ayant de 1 à 4 atomes de carbone, en particulier un radical alkyle ayant 2 ou 3 atomes de carbone.

**7.** Mélanges d'au moins deux colorants azoïques selon l'une ou plusieurs des revendications 1 à 6.

**8.** Procédé pour préparer des colorants azoïques de formule I selon la revendication 1, caractérisé en ce qu'on copule un composé diazonium d'une amine de formule II :

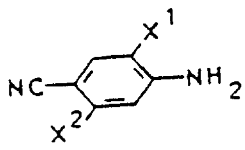

(II)

sur un composant de copulation de formule générale III :

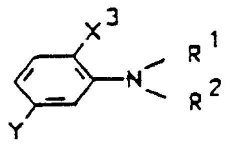

(III)

dans lesquelles Y, $X^1$, $X^2$, $X^3$, $R^1$ et $R^2$ ont les significations données dans la revendication 1.

**9.** Procédé selon la revendication 8, caractérisé en ce que, pour préparer des mélanges d'au moins deux colorants de formule I, on utilise au moins deux composés diazonium d'amines de formule II et/ou au moins deux composants de copulation de formule III.

**10.** Procédé pour teindre et imprimer des matières fibreuses hydrophobes et leurs mélanges avec des matières fibreuses naturelles, avec les colorants monoazoïques de formule générale I selon la revendication 1 et leurs mélanges selon la revendication 7.